# EUROPEAN PATENT APPLICATION

(11) **EP 1 986 068 A1**
(43) Date of publication of application: **29.10.2008**
(21) Application number: 06712366.1
(22) Date of filing: 26.01.2006
(51) Int. Cl.: G06F 1/00, G06K 17/00

(54) **INFORMATION PROCESSING DEVICE PARTS HISTORY MANAGEMENT SYSTEM**

(71) Applicant: Fujitsu Ltd., Kawasaki-shi, Kanagawa 211-8588 (JP)
(72) Inventor: WAKUDA, Rinko, Kawasaki-shi Kanagawa 211-8588 (JP)
(74) Representative: Holtby, Christopher Lawrence
(86) International application number: PCT/JP2006/301184
(87) International publication number: WO 2007/086116

(57) **Abstract**

In a parts history management system, one or plural processing unit which is composed of plural parts replaceable upon failure, processes information, and is replaceable upon failure and a monitoring unit which monitors the state of the processing unit are mounted on an apparatus chassis. A wireless tag for a part is attached to each of the plural parts constituting the processing unit. A reader/writer which inputs/outputs information with respect to the wireless tags for the parts is provided in each processing unit. The reader/writer is provided in the processing unit, and a movement mechanism moves the reader/writer to a parts mounted positions in the unit. A history information management unit is provided in the monitoring unit, is connected to the reader/writer of the processing unit, and instructs write or read of history information with respect to the wireless tags for the parts so as to manage the information.

## Description

This application is a continuation of PCT/JP2006/301184, filed July 26, 2006.

### Technical Field

The present invention relates to a parts history management system of an information processing apparatus which manages history information of constituent parts of units mounted on a chassis of the information processing apparatus such as a server by using wireless tags and, particularly, relates to the parts history management system which manages history by attaching wireless tags to parts, which constitute a system board or the like mounted on the information processing apparatus and are replaceable upon failure.

### Background Art

Conventionally, in information processing of a server or the like that realizes a core business system having high sociality, as hardware, for example, in a maximum configuration, 128 CPUs, 512 G bytes of a maximum memory capacity, 128 hard disk drives of 73 G bytes, 320 PCI slots, and a maximum partition number of 15 are implemented to maximize the time limitations and throughput, thereby realizing extremely high processing performance, reliability, stability, and flexibility. For example, regarding the maximization of time limitations, the interior of a chassis is always monitored by many checkers, detected errors are automatically recovered by a data protection function such as ECC, system failure is avoided even in case of troubles by a dynamic degeneration function or redundancy mechanism, and, furthermore, parts can be replaced without stopping the system since main components can be actively replaced. Regarding the maximization of the throughput, in order to adapt to change of transactions or the scale of operation, hardware resources are flexibly allocated by using a partition function and a dynamic reconfiguration function in combination so as to adapt to operations in which load is varied depending on time, for example, varied between day time and night time or end of a month and beginning of the month. In the partition function, a system board on which CPUs and memories are mounted is used as a unit, a plurality of partitions are set by combining one or plural system boards, and the interior of each system board is divided into partitions, for example, by two-CPU units, thereby realizing a flexible partition configuration and resource placement without being physically limited. The dynamic reconfiguration function enables addition and separation of CPUs, memories, and I/Os without stopping the system, thereby realizing addition of resources and replacement of parts of the system and flexible resource placement adapted to change of the amount of data or the amount of operations. In such a server realizing high reliability, high stability, and high flexibility, plural system boards on which CPUs and memories are mounted are housed in an apparatus chassis, and a system monitoring mechanism (System Control Facility) that monitors and controls the entire system realized by the plural system boards is provided. In addition, in the apparatus chassis, many units such as plural power source units, DC-DC converters, and fan trays are housed. When failure occurs in the various units, which are housed in the apparatus chassis in this manner, they ca be subjected to active replacement without stopping the system. Therefore, when a particular system board fails, a maintenance staff is informed about that, makes an arrangement for a parts center to prepare a new system board, and actively replaces the failed system board without stopping the system so as to recover the failure. The system board removed due to failure is collected to the manufacturer; the location of the failure is specified, and the cause of the failure is analyzed; information about the failure is collected and registered in a database; and the failure information is provided with respect to access from a design section; thereby reflecting it to improvement of design quality of the product. In addition, in a system board on which plural CPUs and memories are mounted, the mounted CPUs and memories are also replaceably mounted. Therefore, for example, regarding a system board in which failure is detected in a test after manufacturing, the system board can be recovered to a normal state when the system board is collected and the CPU or memory that is the cause of the failure is replaced. In generation of failure information of such failed parts, history information of the parts, for example, manufacturing of products using the parts, tests, shipment, operation in a delivery destination, and failure during tests or operation is important. However, it is extremely difficult to individually understand the history information and manage data for each of the units incorporated in an apparatus and the parts incorporated in the units. In order to solve this problem, there is known a system in which wireless tags are attached to parts constituting an apparatus, manufacturing information, failure information according to tests, shipment information to delivery destinations, and the like is written to the wireless tags of the parts upon manufacturing, tests, and shipment by a reader/writer installed outside, and, when failure occurs during operation after delivery, failure information is written to the wireless tag of the failed part so as to read the information written to the wireless tag of the part when the failed part is collected and analyzed, thereby enabling easy acquisition of the history information of the failed part.
Patent Document 1: Japanese Patent Application Laid-Open (*kokai*) No. 2000-285170
Patent Document 2: Japanese Patent Application Laid-Open (*kokai*) No. 2000-048066
Patent Document 3: Japanese Patent Application Laid-Open (*kokai*) No. 2001-022230

However, in a conventional parts history management system using such wireless tags, it is presupposed that the wireless tags attached to the parts which are incorporated in an apparatus and replaceable upon failure can be accessed from a reader/writer installed outside and a reader/writer provided in the apparatus itself. However, regarding the parts such as CPUs and memories mounted on system boards of a server, normally, a circuit board on which the CPUs and memories are mounted are incorporated in a metal unit case, which also has a shield function, and housed in an apparatus chassis; therefore, radio waves from the outside reader/writer are blocked by the unit case and attenuated, access to the wireless tags attached to the parts in the unit cases cannot be made, and management of the history information by the wireless tags cannot be utilized for the parts housed in the unit cases, which is a problem. Therefore, installing a reader/writer in the unit case so as to access the wireless tags of all the mounted parts is conceivable. However, regarding the CPUs mounted on the system boards , the operating frequency is, for example, more than 2 GHz, electrical noise has to be reduced as much as possible in order to ensure stable operation, the radio waves used in access to the wireless tags by the reader/writers also have to be suppressed to necessity minimum transmission power, and using large transmission power that enables access to the wireless tags of all the parts by one reader/writer is not permissible. Therefore, in order to carry out communication with the wireless tags by shortest distances, providing plural reader/writers inside so that they respectively correspond to the wireless tags of the parts one-to-one or one-to-n by grouping the wireless tags is conceivable. However, for example in the case of a system board, the number of replaceable parts such as CPUs and memories is almost 100, and providing plural reader/writers corresponding to them is impossible in terms of cost and space.

### Disclosure of the Invention

According to the present invention to provide a parts history information management system of an information processing apparatus which enables management of history information of parts tags housed in unit cases, which cannot be accessed by external reader/writers, by using wireless tags is provided.

The present invention provides a parts history management system of an information processing apparatus in which one or plural processing unit which is composed of plural parts replaceable upon failure, processes information, and is replaceable upon failure and a monitoring unit which monitors the state of the processing unit are mounted on an apparatus chassis.

As such a parts history information management system, the present invention has
plural wireless tags for the parts attached to the plural parts constituting the processing unit, respectively;
a reader/writer which inputs/outputs information to or from the wireless tag for the part and is provided in each of the processing unit;
a movement mechanism which is provided in the processing unit and moves the reader/writer to a part mounted position in the unit; and
a history information management unit which is provided in the monitoring unit, is connected to the reader/writer of the processing unit via a wireless network line, and gives an instruction of write or read of history information with respect to the wireless tag for the part so as to manage the information.

The processing apparatus is, for example, a server, and the processing unit is a system board on which a CPU, memory, DC-DC converter, and the like which are replaceable upon failure are mounted.

In the wireless tag for the part, manufacturing information including a manufacturer name, lot number, serial number, received date, part unique information, and the like is written in advance in a manufacturing stage.

The movement mechanism is provided on a cover inner surface of a unit case, which can be opened/closed, and moves the reader/writer in a two-dimensional direction with respect to plural parts mounted on a main body of the case so as to move the reader/writer to an arbitrary part mounted position.

When first power-on after the apparatus is manufactured is determined, the history information management unit instructs the reader/writer of the processing unit to read and create parts mounted position information and causes the reader/writer to create and retain the parts mounted position information.

When a notification of the information of failure occurred in the processing unit is received from the monitoring unit, the history information management unit instructs the reader/writer provided in the processing unit of the failure occurred location to write the failure information to the wireless tag for the part of the failure occurred location so as to move the reader/writer by the movement mechanism to the mounted position of the failure occurred part and causes the reader/writer to write the failure information to the wireless tag for the part. The failure information includes a failure content, the mounted position upon failure occurrence, and failure occurrence date and time.

Upon operation start after apparatus delivery, the history information management unit reads shipment information which is written upon shipment from a wireless tag for the chassis attached to the outside of the apparatus chassis, instructs the reader/writer of all the processing unit to write the shipment information so as to sequentially move the reader/writer by the movement mechanism to the mounted positions of all the constituent parts and write the shipment information to the wireless tags for the parts. The shipment information includes shipment date and time and a shipment destination.

When a notification of parts replacement information caused along active replacement of the part mounted in the processing unit is received from the monitoring unit during operation after an apparatus test step or apparatus delivery, the history information management unit instructs the reader/writer to write the parts replacement information to the tag for the part of the replaced part so as to move the reader/writer by the movement mechanism to the mounted position of the replaced part and causes the reader/writer to write the parts replacement information to the wireless tag for the part. The parts replacement information includes replaced date and time and the mounted position upon replacement.

The parts history management system of the present invention further has
an outside wireless tag attached to outside of another unit which is replaceably mounted on the apparatus chassis; and
a reader/writer for the chassis interior which inputs/outputs information with respect to the outside wireless tag and is fixedly disposed in the apparatus chassis; wherein
the history information management unit instructs the reader/writer for the chassis interior to write or read history information to or from the outside wireless tags so as to manage the history information of said another unit. The information processing apparatus is a server, and the another unit includes a power source device, a fan tray, or a disk device which is replaceable by the unit upon failure.

The history information management unit transmits history information read from the wireless tag for the part to an external history information database via a wireless network line provided in the information processing apparatus. In this case, the history information management unit encrypts and transmits read history information.

According to the present invention, when the history information is to be written to the wireless tags for the parts attached to the parts such as CPUs, memories, and the like constituting a processing unit housed in a metal case or the like which functions as a shield case, the reader/writer is moved to the position of wireless tag for the part of the mounted part by the movement mechanism so as to perform positioning to the shortest distance and access the history information by requisite minimum transmission power, thereby efficiently performing access without deteriorating the noise environment of the mounted parts such as CPUs.

Moreover, even when many replaceable parts are mounted in the unit case and the wireless tags for the parts are provided, respectively, merely one reader/writer is required to access the wireless tags, and saving of the installation space and reduction of cost can be achieved.

Furthermore, manufacturing information, failure information generated during tests or operation, shipment information, and replacement information caused along with active parts replacement can be individually written to the wireless tags of the mounted parts which cannot be accessed from the outside reader/writer housed in the unit case; and, with respect to a failed part when a failed unit is collected, the history information thereof can be readily acquired to build a database in combination with failure analysis results, thereby enabling feedback to a design section to contribute to improvement of design quality.

### Brief Description of Drawings

FIGS. 1A and 1B are explanatory drawings of a system environment to which a parts history information management system according to an embodiment of the present invention is applied;
FIGs. 2A and 2B are explanatory drawings of an apparatus structure of a server to which the present embodiment is applied;
FIGs. 3A and 3B are block diagrams of a hardware configuration of the server of FIGs. 2A and 2B;
FIGs. 4A and 4B are explanatory drawings of a system board having a reader/writer movement mechanism and a system monitoring mechanism;
FIGs. 5A and 5B are enlarged explanatory drawings of the case main body of the system board of FIGs. 4A and 4B;
FIG. 6 is an explanatory drawing of a reader/writer mounted on a movement mechanism of the case cover of FIGs. 4A and 4B;
FIG. 7 is an explanatory drawing of a wireless tag for a part used in the present embodiment;
FIG. 8 is an explanatory drawing of a unit outside tag management table provided in the history information management unit of FIGs. 4A and 4B;
FIG. 9 is an explanatory drawing of the unit built-in tag management table provided in the history information management unit of FIGs. 4A and 4B;
FIG. 10 is an explanatory drawing of the tag management table provided in the reader/writer of FIG. 6;
FIG. 11 is an explanatory drawing of a history information table provided in the wireless tag for a part of FIG. 7;
FIG. 12 is an explanatory drawing of a server history management procedure in FIGS. 1A and 1B;
FIG. 13 is a flow chart of a parts history management process by the history information management unit of FIGs. 4A and 4B;
FIG. 14 is a flow chart of the parts history management process subsequent to FIG. 13; and
FIG. 15 is a flow chart of a reader/writer process provided on the system board of FIG. 6.

### Best Mode for Carrying Out the Invention

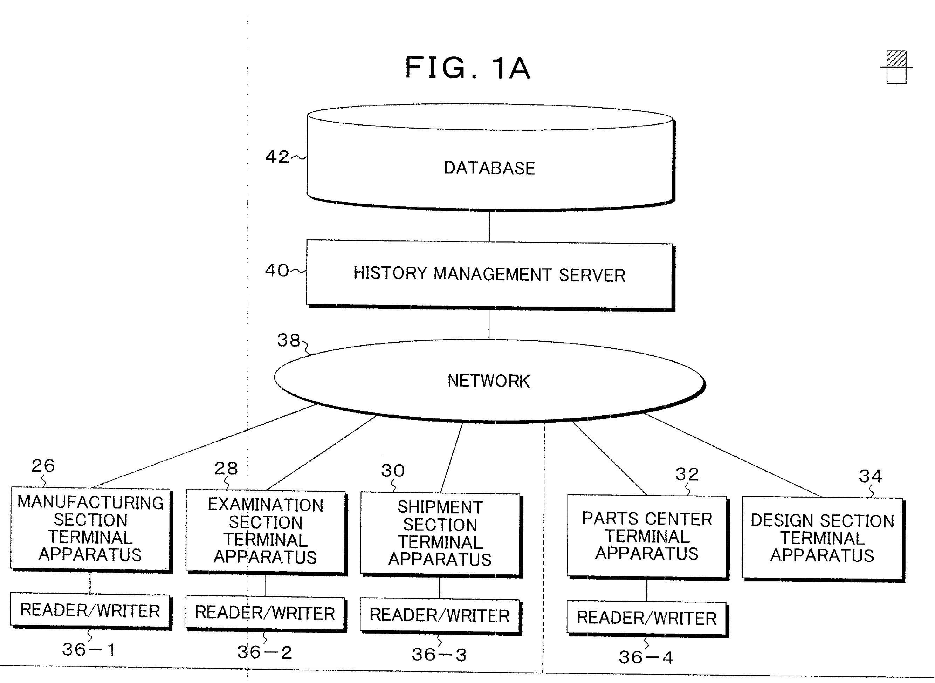

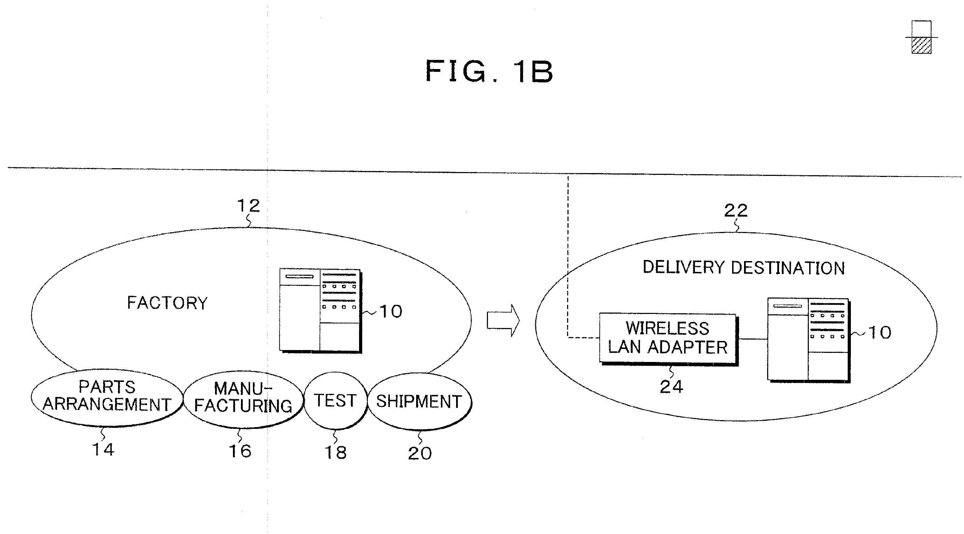

FIGS. 1A and 1B are explanatory drawings of a system environment to which a parts history information system according to an embodiment of the present invention is applied, wherein a server is taken as an example as an apparatus which is a target of parts management information. In FIGS. 1A and 1B, a server 10 is delivered to a delivery destination 22 serving as a user through steps of parts arrangement 14, manufacturing 16, test 18, and shipment 20 in a factory 12. In the delivery destination 22 to which the server 10 is delivered, the server 10 is installed and then started up to start operation of the system. In the present embodiment, with respect to the server 10 manufactured in the factory 12, wireless tags for parts are attached to the parts to be housed in the server 10 and prepared in the stage of the parts arrangement 14, and the parts to which the wireless tags for the parts are attached are incorporated in the server 10 in the step of the manufacturing 16. Moreover, a wireless tag is attached also to the server itself in addition to those for the parts used in the server 10. With respect to the various wireless tags attached to the server 10, reader/writers 36-1 to 36-4 for inputting and outputting history information are installed in accordance with needs. In the stages of the factory 12, a manufacturing section terminal apparatus 26, an examination section terminal apparatus 28, and a shipment section terminal apparatus 30 are installed, and the reader/writers 36-1 to 36-3 are respectively installed therefore. The reader/writers 36-1 to 36-3 access the wireless tags in the server 10 side when the server 10 passes the installation locations thereof so as to write manufacturing information in the manufacturing section terminal apparatus 26, write failure information in the examination section terminal apparatus 28 if failure information is detected in the server 10, and write shipment information in the shipment section terminal apparatus 30. In the server 10 which is installed in the delivery destination 22 and in an operated state, if failure occurs in a constituent part, a reader/writer is internally used, thereby writing failure information to the wireless tag for the part provided in the part of the failure occurred location. Regarding failure of the server 10 during operation, the failed part can be actively replaced by the unit of, for example, each unit as it will be elucidated in later description. The failed unit collected through active replacement is collected to, for example, a parts center, history information including failure information is read by the reader/writer 36-4 of the parts center terminal apparatus 32 from the wireless tag for parts provided in the failed and collected unit and sent to a history management server 40 via a network 38 so that history information of the part can be registered in the database 44. Furthermore, with respect to the history management server 40, a design section terminal apparatus 34 can access the database 42, and analysis results and history information of failed parts saved in the database 42 can be referenced in accordance with needs; thus, the history information of the parts including failure information is fed back to product designing so as to improve design quality of the product designing. Furthermore, with respect to the server 10 which is installed in the delivery destination 22 and in an operated state, connection with the history management server 40 is established via the network 38 by utilizing a wireless network line provided by a wireless LAN adapter 24 that the server 10 has; and, for example, in accordance with a request from the history management server 40, history information can be read and collected from the wireless tags for parts provided in the server 10 which is in operation in the delivery destination 22 so as to register the history information of necessary parts in the database 44 together with failure information. The access made by the history management server 40 to the server 10 of the delivery destination 22 needs agreement of the user of the delivery destination 22, and the history information read from the wireless tags is encrypted and transmitted in order to ensure security.

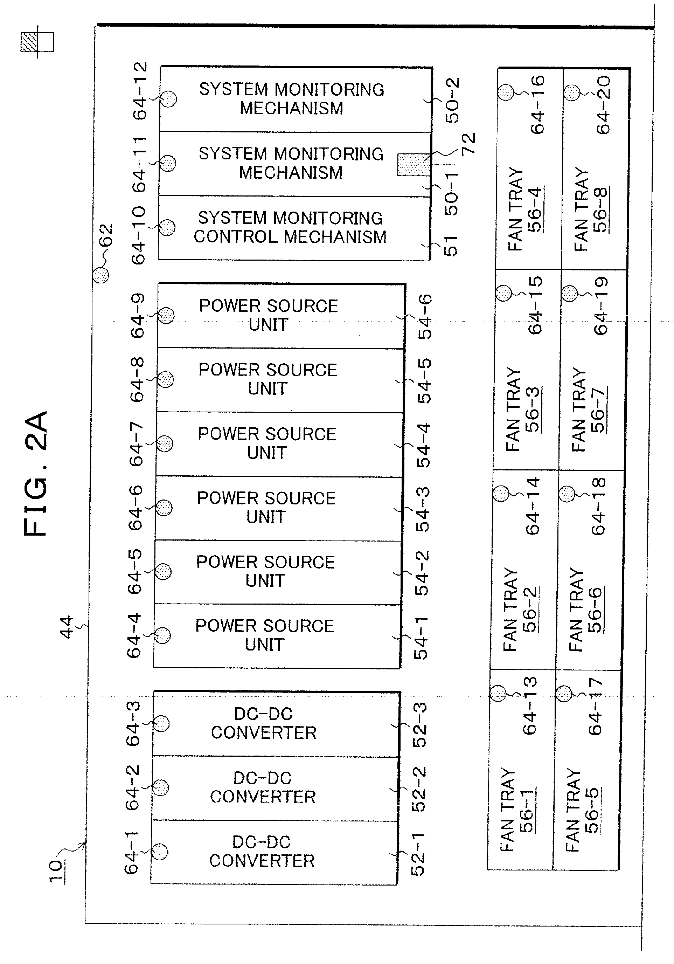

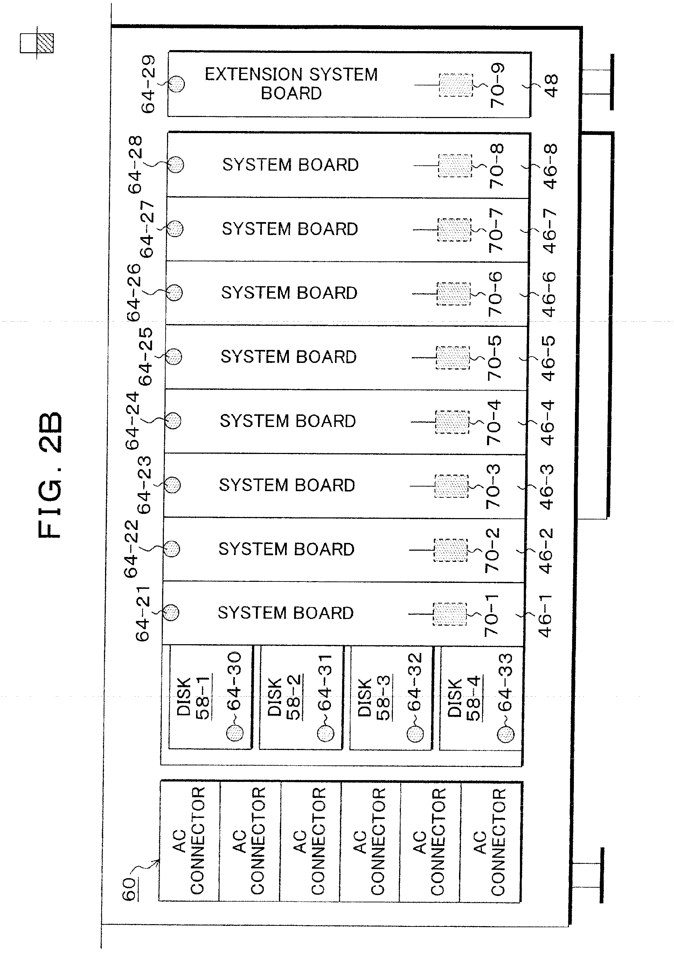

FIGs. 2A and 2B are explanatory drawings of the server to which the parts history information and system according to the present embodiment is applied. In FIGs. 2A and 2B, the server 10 is provided with eight system boards 46-1 to 46-8 that function as information processing units in a chassis 44, and an extension board 48 adjacent to them is further provided. System monitoring mechanisms 50-1 and 50-2 are provided in the upper right side of the chassis 44. The system monitoring mechanisms 50-1 and 50-2 are duplicated; for example, the system monitoring mechanism 50-1 operates as a primary, and the system monitoring mechanism 50-2 operates as a secondary. The system monitoring mechanism 50-1 of the primary side performs overall monitoring control of hardware and software in the system boards 46-1 to 46-8 and the extension system board 48 and, when hardware state information is changed, receives an interruption notification and retains it. When software state information is changed, the system monitoring mechanism 50-1 receives a hardware control instruction and retains it. Furthermore, the system monitoring mechanism 50-1 detects failure of the board main bodies of the system boards 46-1 to 46-8 and the extension system board 48 or failure occurrence in CPUs or memories provided on the boards, which will be elucidated later, retains the failure information, and displays the failure occurrence in an operator panel so as to inform the maintenance staff about the failure occurrence and cause active replacement of the failed system board to be performed. The secondary system monitoring mechanism 50-2 performs duplicated retention in response to synchronization with the retention of the software state information and hardware state information of the system boards 46-1 to 46-8 by the primary side, so that, if the system monitoring mechanism 50-1 of the primary side fails, system monitoring can be continued by switching the process to the secondary side. Furthermore, in the left side of the system monitoring mechanisms 50-1 and 50-2, a system monitoring control mechanism 51 is provided. The system monitoring control mechanism 51 controls the system monitoring mechanisms 50-1 and 50-2 and performs input/output processing with an operator panel 78, which will be elucidated in later description, and input/output processing with a maintenance terminal apparatus which is connected in accordance with needs via a serial port.

In an upper part of the chassis 44, three DC-DC converters 52-1 to 52-3 and six power source units 54-1 to 54-6 are provided from the left side. In addition, below them, eight fan trays 56-1 to 56-8 are provided. Furthermore, in the left side of the system boards 46-1 to 46-8, four disk units 58-1 to 58-4 are installed, and, in the left side thereof, a connector group 60 in which six AC connectors are provided is installed. Regarding installation of a wireless tag with respect to the server 10, a chassis tag 62 which is accessible by an outside reader/writer is provided in the chassis 44. Externally attached wireless tags 64-1 to 64-33 are respectively provided outside of the units of the DC-DC converters 52-1 to 52-3, the power source units 54-1 to 54-6, the fan trays 56-1 to 56-8, the systemboards 46-1 to 46-8, the extension system board 48, and the disk units 58-1 to 58-4 which are incorporated in the chassis 44. The access with respect to the wireless tags incorporated in the server 10 is performed by the processing function of a history information management unit incorporated in the system monitoring mechanism 50-1, which is described later. Therefore, in the system monitoring mechanism 50-1, a reader/writer 72 for accessing the externally attached wireless tags 64-1 to 64-33, which are provided outside the units installed in the interior of the chassis 44, is provided. On the other hand, in the system boards 46-1 to 46-8 and the extension system board 48, dedicated reader/writers 70-1 to 70-9 are provided in the interior of the unit cases thereof, respectively. A wireless LAN adapter for communicating and connecting the server 10 with outside apparatuses by a wireless LAN is incorporated in the system monitoring mechanism 50-1. The history information management unit incorporated in the system monitoring mechanism 50-1, which is described later, utilizes the wireless LAN adapter that the system monitoring mechanism 50-1 has so as to perform transmission of information with the reader writers 70-1 to 70-8 incorporated in the system boards 46-1 to 46-8 by using wireless LAN lines.

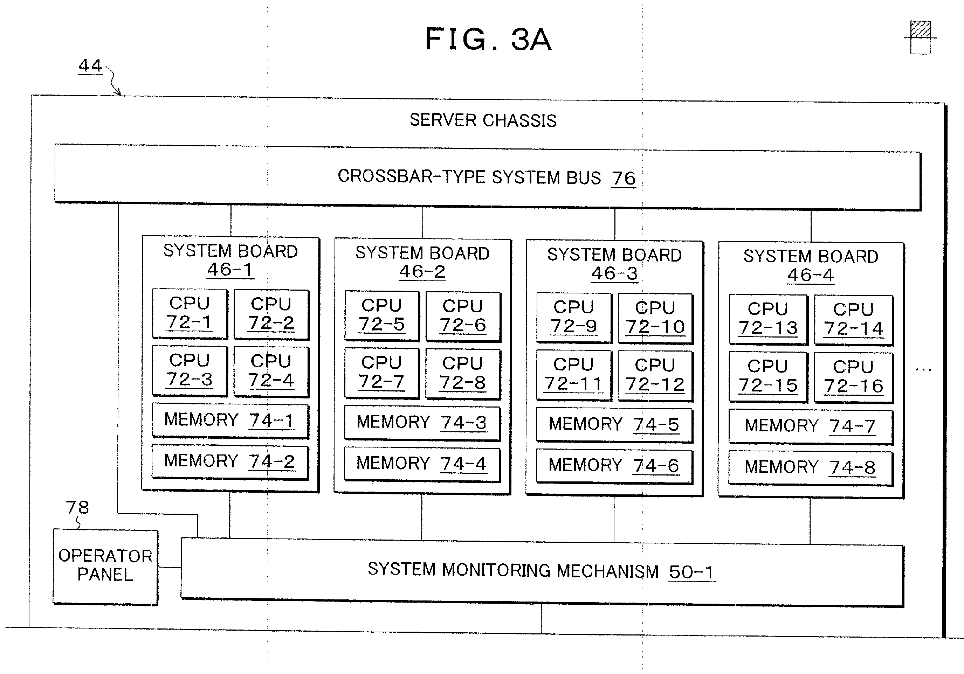

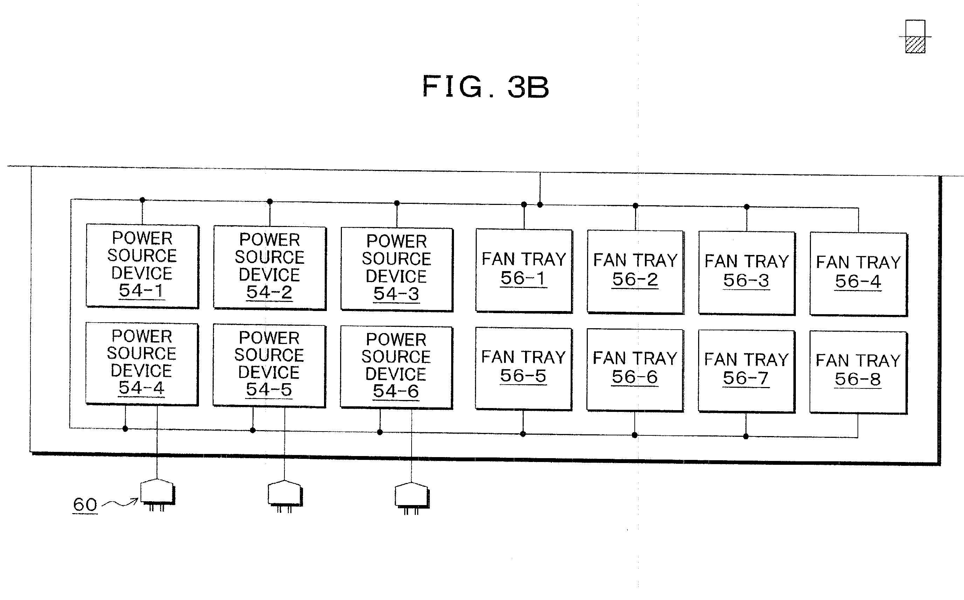

FIGs. 3A and 3B are block diagrams of a hardware configuration of the server 10 of FIGs. 2A and 2B. In FIGs. 3A and 3B, the state in which four system boards 46-1 to 46-4 are incorporated in the server chassis 44 in order to simplify explanation; and, in each of the system boards 46-1 to 46-4, when the system board 46-1 is taken as an example, CPUs 72-1 to 72-2 and memories 74-1 to 74-2 are mounted. The system boards 46-1 to 46-4 are connected by a crossbar-type system bus 76. The system boards 46-1 to 46-4 are connected to the system monitoring mechanism 50-1, and the system monitoring mechanism 50-1 is connected to an operator panel 78. The system monitoring mechanism 50-1 performs overall control and monitoring of the hardware and software of the system boards 46-1 to 46-4. For example, the system monitoring mechanism 50-1 turns on/off power by operating a power switch of the operator panel 78 as power control, in addition, enables resetting of the apparatus main body and turning on/off the power by remote operations, and performs power-on prevention according to failure detection, OS start control in case of power outage, and the like. In addition, as active replacement support of the power source devices 54-1 to 54-6 and the fan trays 56-1 to 56-8, the system monitoring mechanism 50-1 performs support processes of maintenance operations upon active replacement when they fail. Furthermore, as monitoring functions during operation, it monitors the system operation state, the state of fans, the temperature in the apparatus main body, the environmental temperature, and the like. Furthermore, as processes that accompany power-on upon system start-up, monitoring of shipment diagnosis and the network configuration and state monitoring of the power source, fans, DC voltages, system boards, memories, CPUs, and the like is performed. Note that, although FIGs. 3A and 3B takes the case in which four CPUs are provided per one system board as an example; in the present embodiment, eight CPUs can be mounted per one system board as a maximum configuration, and extension to 128 CPUs can be made as a maximum configuration. In this case, 133 G/s can be ensured as the maximum throughput by the crossbar-type system bus 76, and PCI slots that function as input/output devices can be extended to 320 slot at a maximum.

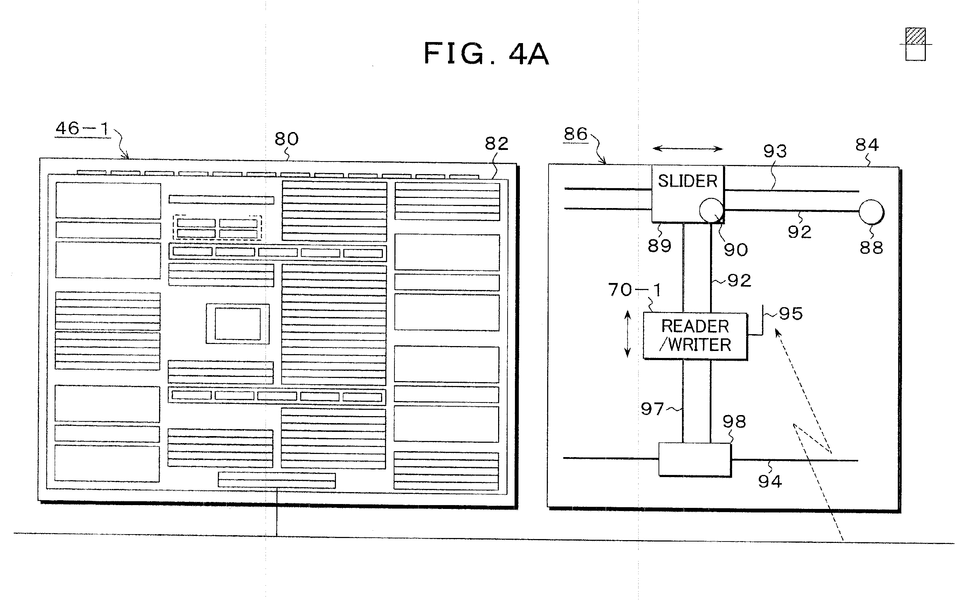

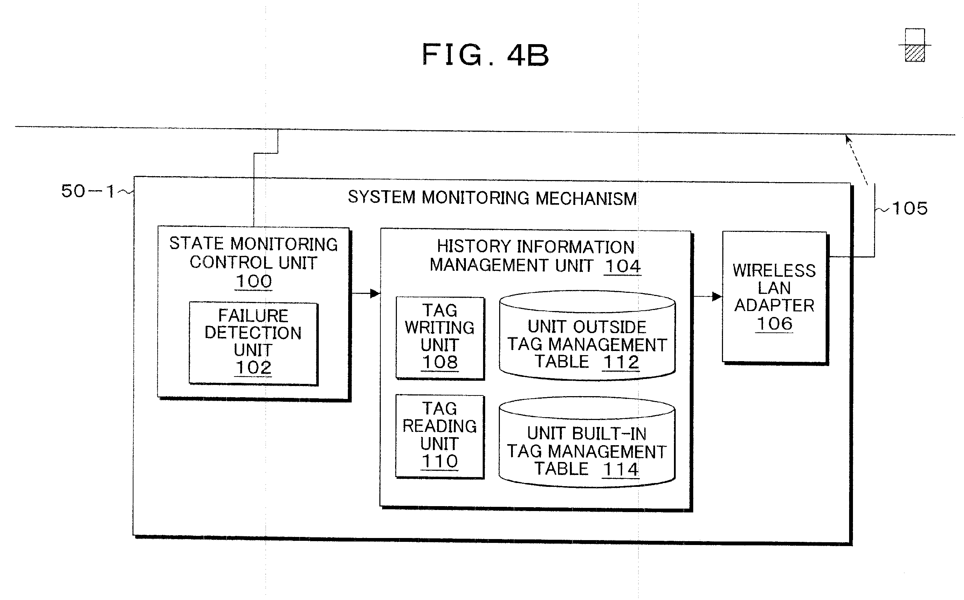

FIGs. 4A and 4B are explanatory drawings of the system board and the system monitoring mechanism housed in the server 10 of FIGs. 2A and 2B having a reader/writer movement mechanism. In FIGs. 4A and 4B, the system board 46-1 is taken as an example, and the system board 46-1 is composed of a case main body 80, in which a circuit board 52 is incorporated, and a case cover 84. The case main body 80 and the case cover 84 are composed of metal cases and electrically shielded from outside. The radio waves to the wireless tags, for example, from external reader/writers are shielded by the case main body 80 and the case cover 84 and attenuated, and the radio waves cannot access wireless tags for parts installed in the case main body 80.

In the case cover 84, the movement mechanism 86 of the reader/writer 70-1 is provided. The movement mechanism 86 has an X-axis motor 88 and a Y-axis motor 90. The X-axis motor 88 rotates a screw shaft 92, and a slider 98 having a screw nut is screwed in the screw shaft 92. Therefore, when the screw shaft 92 is rotated by the X-axis motor 88, the slider 98 is moved along with a guide rail 93 in the left/right direction in accordance with the rotation direction. In parallel with the screw shaft 92 provided on the slider 98, a guide rail 94 is installed. A screw shaft 96 and a guide rail 97 are disposed between the slider 98 of the screw shaft 92 and the guide rail 94, and the screw shaft 96 is rotated by the Y-axis motor 90 which is moved along the guide rail 94. With respect to the screw shaft 96, as well as the slider 98, the reader/writer 70-1 is installed on a stage having a screw hole through which the screw shaft 96 penetrates through. Therefore, when the screw shaft 96 is rotated by the Y-axis motor 90, the reader/writer 70-1 moves along the guide rail 97 in the vertical direction in accordance with the rotation direction. An antenna 95 for communication by a wireless LAN is provided on the reader/writer 70-1. Note that, the reader/writer 70-1 is separated into a fixed side and a moving side, the moving side is mounted on the movement mechanism 86 so as to be movable, and the fixed side is installed on the case cover 84. With respect to the system board 46-1, the system monitoring mechanism 50-1 is provided, and a state monitoring control unit 100 is provided in the system monitoring mechanism 50-1. A failure detection unit 102 is provided in the state monitoring control unit 100, so as to detect failure occurred in the system board 46-1 and output failure information. In addition, a history information management unit 104 is provided in the system monitoring mechanism 50-1. In the history information management unit 104, a tag writing unit 108, a tag reading unit 110, a unit outside tag management table 112, and a unit built-in tag management table 114 are provided; and an antenna 105 is implemented via a wireless LAN adapter 106. The history information management unit 104 references the unit outside management table 112 at the timing of power-on of the server in the system monitoring mechanism 50-1 and executes reading/writing of history information with respect to the outside wireless tags 64-1 to 64-33 provided outside the units of the server 10 shown in FIGs. 2A and 2B. Moreover, when the failure detection unit 102 of the state monitoring control unit 100 detects failure occurrence of the system board 46-1, and failure information is received, the history information management unit 104 references the unit built-in tag management table 114, and writes failure information to the wireless tag for a part of the failure occurred part of the system board which is the failure occurrence object.

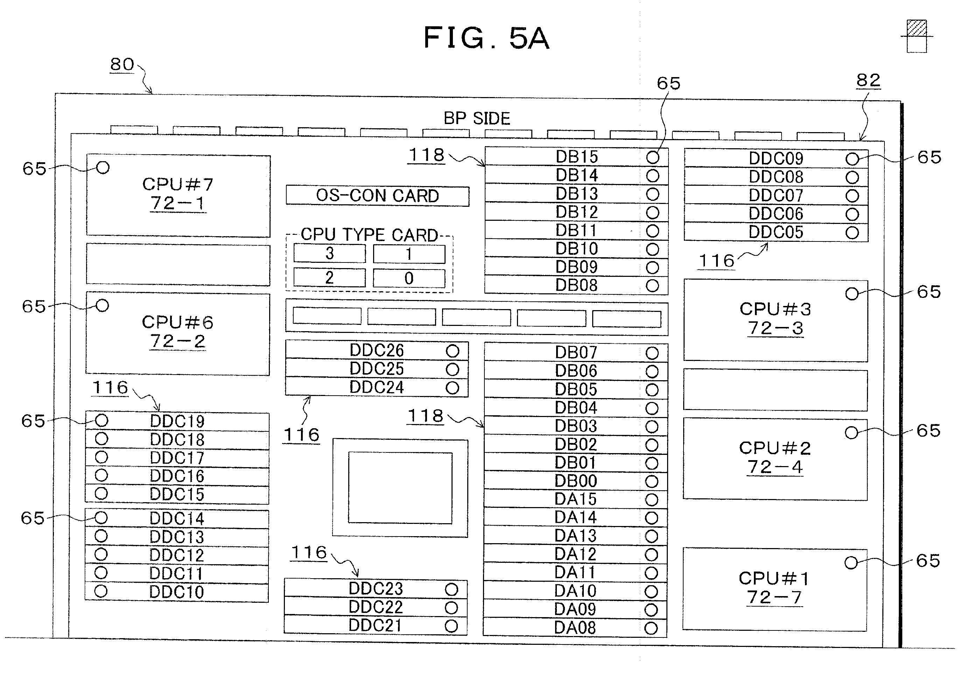

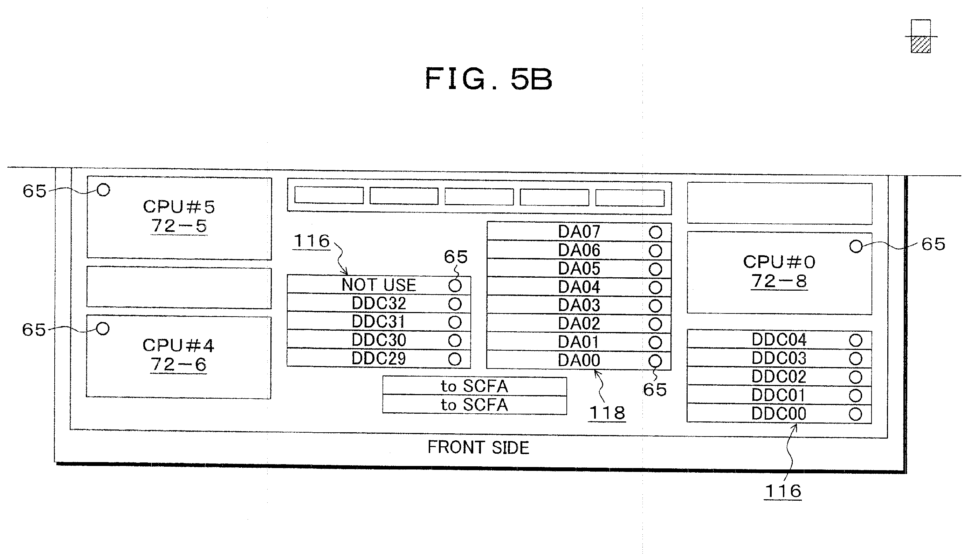

FIGs. 5A and 5B are enlarged explanatory drawings of the case main body side in the system board of FIGs. 4A and 4B. In FIGs. 5A and 5B, on a circuit board 116 incorporated in the case main body 80, eight CPUs 72-1 to 72-8, a DC-DC converter group 116 having 32 DC-DC converters, and a memory group 118 similarly having 32 memories are provided; and each of them can be replaced upon failure. As shown in the drawing, a wireless tag 65 for a part is attached to each of the CPUs 72-1 to 72-8 and the parts of the DC-DC converter group 116 and the memory group 118 mounted on the case main body 80.

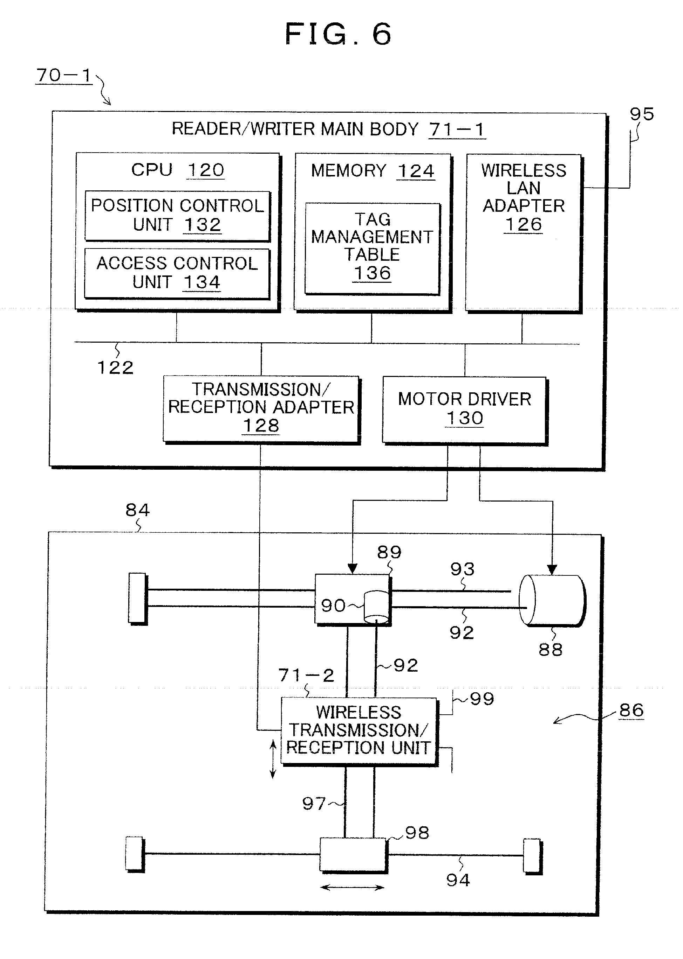

FIG. 6 is an explanatory drawing of the reader/writer 70-1 mounted on the movement mechanism 86 provided on the case cover 84 of FIGs. 4A and 4B. In FIG. 6, the reader/writer 70-1 is separated into a fixed unit 71-1 attached to the case cover 84 side and a wireless transmission/reception unit 71-2, which can be moved by the movement mechanism 86, and they are connected by a signal line. In the fixed unit 71-1 of the reader/writer 70-1, a memory 124, a wireless LAN adapter 126, a transmission/reception adapter 128, and a motor driver 130 are connected to a bus 122 of a CPU 120.

In the CPU 120, as functions realized by execution of programs, a position control unit 132 and an access control unit 134 are provided. Moreover, in the memory 124, a tag management table 136 for managing the wireless tags for parts attached to the parts such as CPUs and memories in the system board serving as access objects of the reader writer 70-1 is provided. In the movement mechanism 86, the wireless transmission unit 99 of the reader/writer 70-1 is separately mounted, and an antenna 99 for accessing the wireless tags is provided in the wireless transmission reception unit 71-2. When an access request, that is, a write request or read request from the history information management unit 104 provided in the systemmonitoring mechanism 50-1 shown in FIGs. 4A and 4B is received via the wireless LAN adapter 126, the reader/writer 70-1 acquires the part mounted position of the requested destination from the tag management table 136, and the position control unit 132 drives the X-axis motor 88 and the Y-axis motor 90 of the movement mechanism 86 so as to two-dimensionally moves the wireless transmission reception unit 71-2 of the reader/writer 70-1 and move it to the part mounted position of the access destination. When positioning of the wireless transmission/reception unit 71-2 of the reader/writer 70-1 by the positioning control unit 132 is completed, the access control unit 134 executes writing or reading of history information based on the access request with respect to the wireless tag for a part of the adjacent object part by wireless communication by the antenna 95 of the wireless transmission/reception unit 71-2.

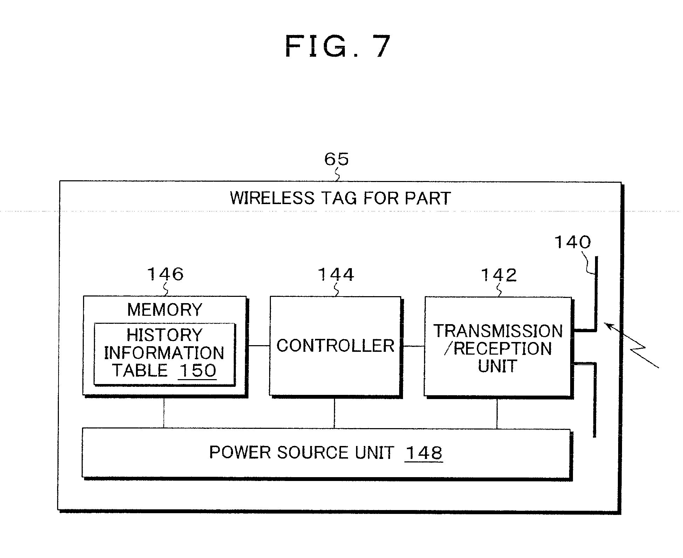

FIG. 7 is an explanatory drawing of the wireless tag 65 for a part used in the present embodiment. The wireless tag 65 for a part is composed of an antenna 140, a transmission/reception unit 142, a controller 144, a memory 146, and a power source unit 148, and a history information table 150 is provided in the memory 146. Each of the unit outside wireless tags 64-1 to 64-33 and the state tag 62 shown in FIGs. 2A and 2B also has the configuration same as that of the wireless tag 65 for a part.

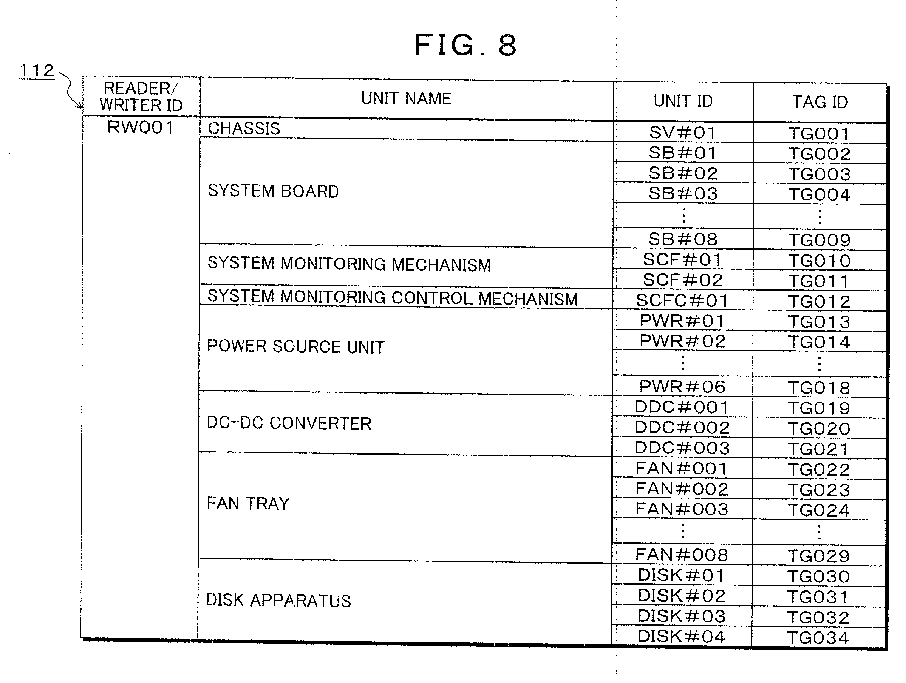

FIG. 8 is an explanatory drawing of the unit outside tag management table 112 provided in the history information management unit 104 of FIGs. 4A and 4B. In the unit outside tag management table 112, a reader/writer ID, names of units, unit IDs, and tag IDs are registered. The unit outside tag management table 112 is accessed by the reader/writer 72 provided in the system monitoring mechanism 50-1; therefore, "RW001" is registered as the reader/writer ID of the reader/writer 72. Moreover, the names of the units are categorized by chassis, system board, system monitoring mechanism, system monitoring control mechanism, power source unit, DC-DC converter, fan tray, and disk apparatus, and the unit IDs and tag IDS respectively corresponding to them are stored. The tag IDs can be used as addresses when the outside wireless tags 64-1 to 64-33 are to be individually accessed by the reader/writer 72.

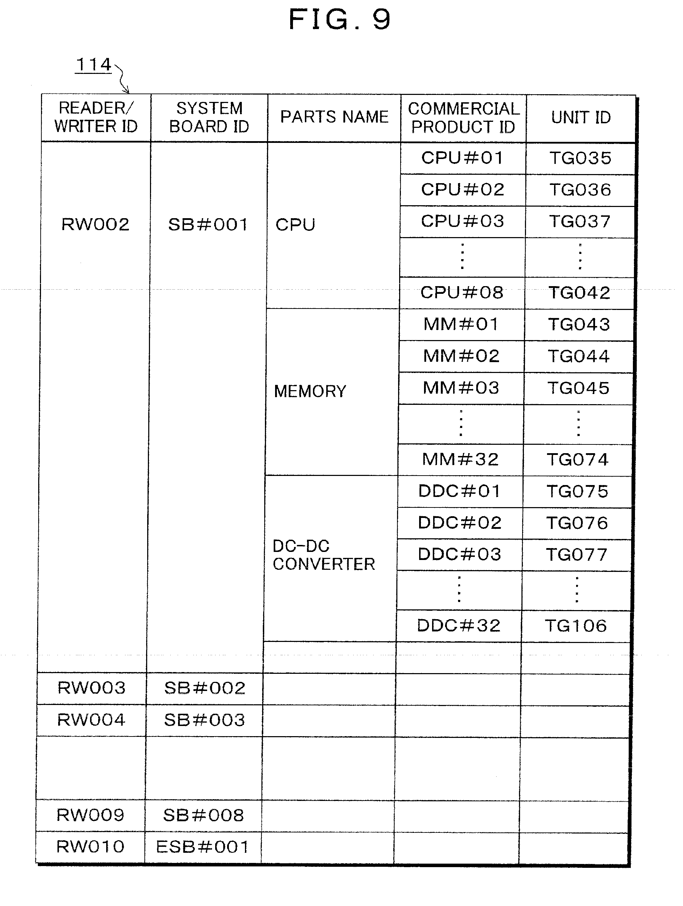

FIG. 9 is an explanatory drawing of the unit built-in tag management table 114 provided in the history information management unit 104 of FIGs. 4A and 4B. The unit built-in tag management table 114 is composed of reader/writer IDs, system board IDs, parts names, parts IDs, and tag IDs. When the system board 46-1 of FIGs. 4A and 4B is taken as an example, the reader/writer 70-1 of this case has a reader ID of "RW002", and the system board ID of the system board 46-1 is "SB#001". On the system board 46-1, as the names of parts, CPUs, memories, and DC-DC converters are mounted as replaceable parts, and the parts ID and tag ID are registered for each of the eight CPUs, 32 memories, and 32 DC-DC converters. In such unit built-in tag management table 114, similar contents are registered for the system boards 46-1 to 46-8 and the extension system board 48 shown in FIGs. 2A and 2B. In the unit built-in tag management table 114, the reader/writer of the system board to be accessed is specified by the reader/writer ID, and the wireless tag for a part to be accessed by the specified reader/writer is specified by the tag ID.

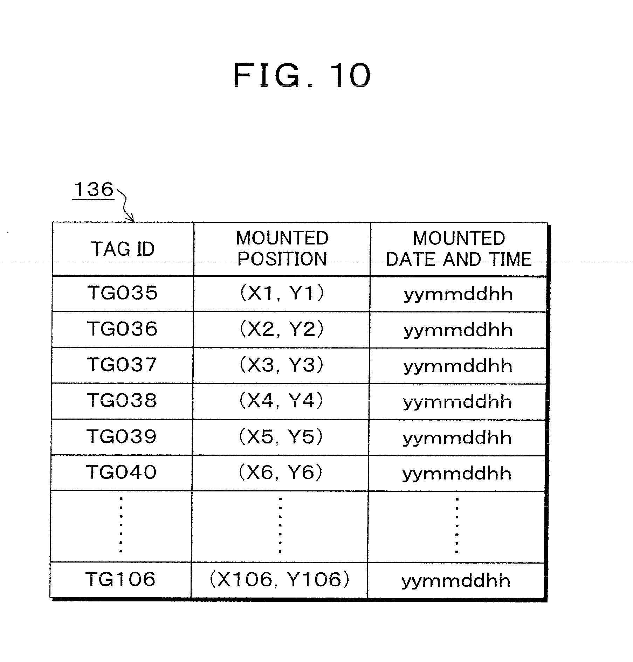

FIG. 10 is an explanatory drawing of the tag management table 136 provided in the reader/writer 70-1 of FIG. 6. In the tag management table 136, tag IDs, mounted positions, and mounted date and time are registered. For example, as the tag IDs, wireless tag IDs for the parts attached to the eight CPUs, 32 memories, and 32 DC-DC converters of the case main body 80 side shown in FIGs. 5A and 5B are registered. As the mounted positions, the parts mounted positions determined by the moved position of the reader/writer 70-1 by the movement mechanism 86 of FIG. 6 are registered as two-dimensional coordinates (X1, Y1) to (X106, Y106). As the mounted date and time, for example, shipment date and time based on the shipment information written by the reader/writer 36-3 of the server 10 after shipment of FIGS. 1A and 1B to the chassis tag 62 of FIGs. 2A and 2B is stored. When the system board is actively replaced due to failure, the actively replaced replacement date and time is registered as mounted date and time. As the mounted positions, the disposed positions of the CPUs, memories, and DC-DC converters in the case main body 80 side of the system board shown in FIGs. 5A and 5B are acquired from design information and registered. As the tag IDs, access to the wireless tags for parts attached to the parts side is made by positioning the reader/writer 70-1 to the mounted positions by the movement mechanism when power is turned on for the first time for testing the manufactured server, and the tag IDs are read and registered.

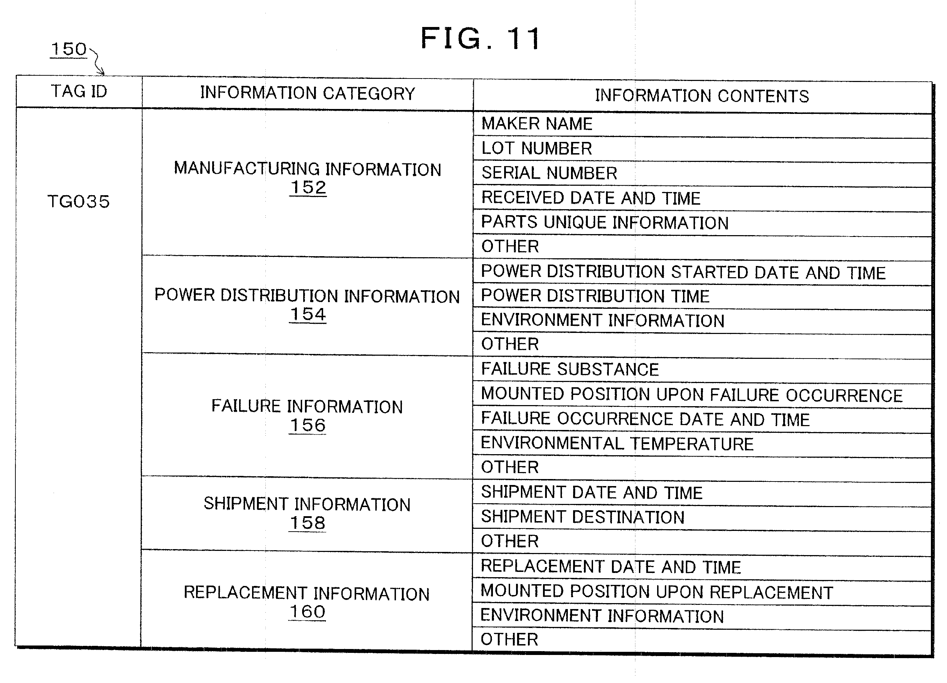

FIG. 11 is an explanatory drawing of the history information table 150 provided in the wireless tag for a part of FIG. 7. The history information table 150 is composed of a tag ID, information categories, and information contents. The information categories are composed of manufacturing information 152, power distribution information 154, failure information 156, shipment information 158, and replacement information 160. As the manufacturing information 152, a manufacturer name, lot number, serial number, received date and time, part unique information, and others are stored. As the power distribution information 154, power distribution started date and time, power distribution time, environmental information such as the temperature and degree of humidity, and others are stored. As the failure information 156, the failure content, mounted position upon failure occurrence, failure occurrence date and time, environmental information such as the temperature and degree of humidity, and others are stored. As the shipment information 158, the shipment date and time, shipment destination, and others are stored.

Furthermore, as the replacement information 160, the replacement date and time, the mounted position upon replacement, and environmental information such as the temperature and degree of humidity, and others are stored. As a matter of course, as the history information registered in the history information management table of the wireless tag for a part, other than these, arbitrary information can be registered in accordance with needs, and the information contents of each information can be also arbitrarily determined in accordance with needs.

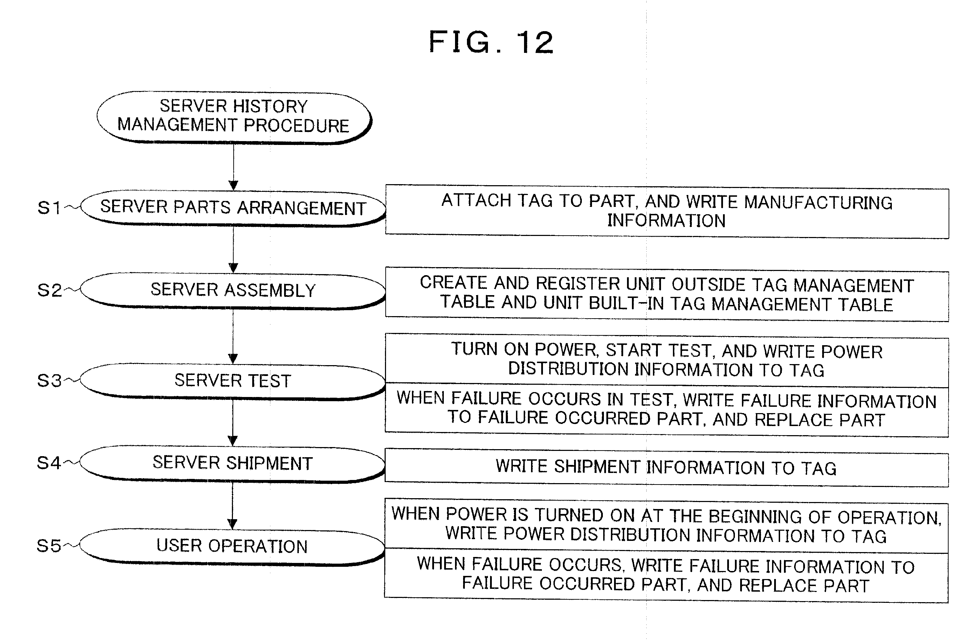

FIG. 12 is an explanatory drawing of a server history management procedure in FIGS. 1A and 1B. In the server history management procedure of FIG. 12, first of all, arrangement of server parts is performed in the step of the parts arrangement 14 in the factory 12 in step S1; and, in the server parts arrangement, tags are attached to the parts, and the manufacturing information 152 shown in FIG. 11 is written. Subsequently, in step S2, server assembly with respect to the manufacturing 16 is performed, and, in this process, the unit outside tag management table 112 and the unit built-in tag management table 114 are created and written in the history information management table 106 of the system monitoring mechanism 50-1 provided in the server. Subsequently, in step S3, a server test is performed. In the server test, based on power-on that is caused along with start of the test, power distribution information is written to the wireless tags. When failure occurs through the server test, failure information is written to the wireless tag of the failure occurred part, and the part is replaced. When the server test of step S3 is normally terminated, server shipment is performed in step S4. In this process, shipment information is written to, for example, the chassis tag 62 of FIGs. 2A and 2B, by the reader/writer 36-1 installed at a gate or the like of the shipment location as shown in FIGS. 1A and 1B according to an instruction from the shipment section manufacturing apparatus 30. Subsequently, in step S5, user operation at the shipment destination is started, and power distribution information is written to the tag along with power-on upon operation start; and, if failure occurs during the operation, failure information is written to the failure occurred part, and the part is replaced. Note that, at the beginning of operation, the shipment information written to the chassis tag 65 is written to each of the tags at the same time.

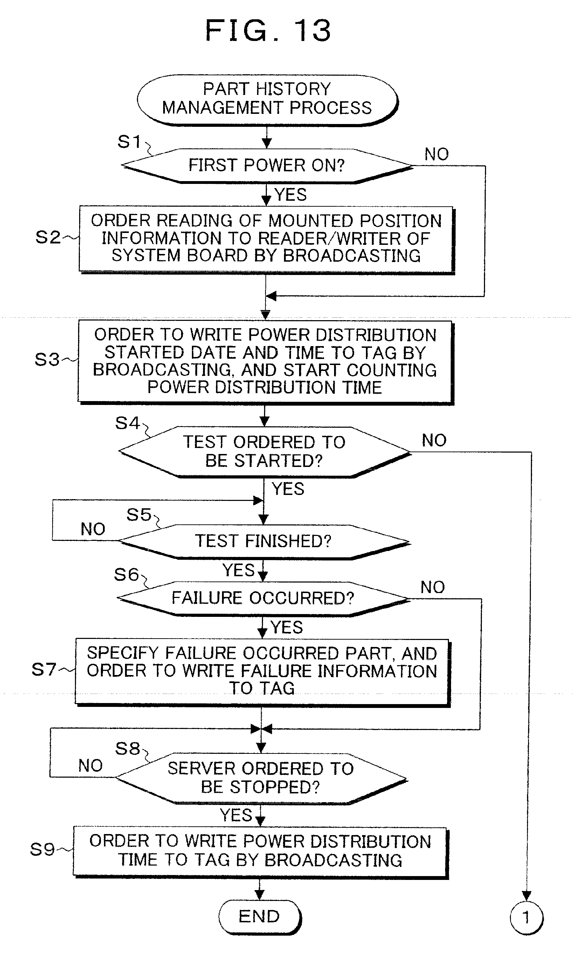

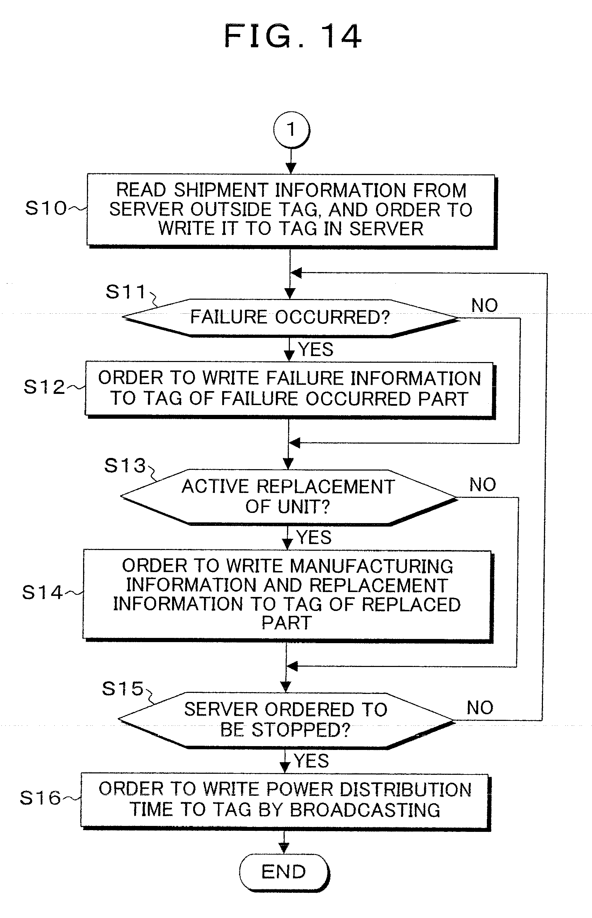

FIG. 13 is a flow chart of a parts history management process by the history information management unit 104 of FIGs. 4A and 4B. In FIG. 13, the history information management unit 104 of the system monitoring mechanism 50-1 provided in the server checks whether it is first power-on in step S1. The first power-on is performed in the step of the test 18 in the factory 12 of FIGS. 1A and 1B. If it is the first power-on, the process proceeds to step S2, in which a reading instruction of mounted positions is transmitted to the reader/writers 70-1 to 70-9 of the system boards 46-1 to 46-8 and the extension system board 48 shown in FIGs. 2A and 2B by broadcasting which can be processed by all the reader/writers. This transmission instruction is performed by using the wireless LAN of the system monitoring mechanism 50-1. Subsequently, in step S3, tag writing of the power distribution started date and time is instructed similarly by broadcasting to the reader/writers 70-1 to 70-9 of the system boards 46-1 to 46-8 and the extension system board 48, and counting of power distribution time is subsequently started. Subsequently, when there is a test start instruction in step S4, test termination is waited for in step S5. When failure occurrence is determined from the test results in step S6, the failure occurred part is selected, and writing of failure information is instructed in step S7. When failure has not occurred, step S7 is skipped. Thus, failure information is written to the wireless tags for parts provided in the parts which are failure objects such as CPUs, memories, and DC-DC converters in which failure has occurred in the test step of the factory. Subsequently, a stop instruction of the server is waited for in step S8. When there is the stop instruction, the process proceeds to step S9 in which counting of the power distribution time started in step S3 is stopped, and required tag writing of the power distribution time is instructed by broadcasting. Meanwhile, if there is no test start instruction in step S4, in other words, when the test in the factory stage is already finished, and it is the case of power-on for operation after the server 10 is installed at the delivery destination 22 of FIGS. 1A and 1B, the process proceeds to step S10 of FIG. 14.

In step S10 of FIG. 14, since it is the first power-on for operation at the delivery destination, the shipment information written to the chassis tag 62 of FIGs. 2A and 2B upon shipment is read by using the reader/writer 72, and writing of shipment information to the outside wireless tags 64-1 to 64-33 provided outside the units by the reader/writer 72 is instructed. At the same time, the reader/writers 70-1 to 70-9 built in the system boards 46-1 to 46-8 and the extension port 48 are instructed to write shipment information to the wireless tags for parts thereof via wireless LAN paths. Subsequently, in step S11, whether failure has occurred during operation of the server is checked. When failure occurs, in step S12, writing of failure information to the wireless tag for a part of the failure occurred location is instructed. According to the writing instruction of the failure information in this case, writing is performed by access from the reader/writer 72 to any of the outside wireless tags 64-1 to 64-33 of the failure occurred unit; and, at the same time, if it is the failure of any of the system boards 46-1 to 46-8 or the extension board 48, writing of failure information is instructed to any of the built-in reader/writers 70-1 to 70-9 through wireless LAN lines so as to instruct writing of the failure information to the failure-occurred wireless tag for a part such as a built-in CPU or a memory. Subsequently, whether unit is actively replaced or not is checked in step S13. When active replacement of the unit is performed, writing instruction of manufacturing information and replacement information to the tag of the replaced location is performed in step S14. Also according to this write instruction, write to any of the outside wireless tags 64-1 to 64-33 provided outside units of FIGs. 2A and 2B is performed by access from the reader/writer 72; and, if it is active replacement of any of the system boards 46-1 to 46-8 or the extension system board 48, writing of manufacturing information and replacement information is instructed to the location serving as the replacement object of the built-in reader/writers 70-1 to 70-9 by using a wireless LAN. Subsequently, whether there is a stop instruction of the server is checked in step S15.

If there is the stop instruction, in step S16, the counting of the power distribution time, which has been started in step S3 of FIG. 13, is stopped to obtain power distribution time, tag writing of the obtained power distribution time is instructed by broadcasting, and the power distribution time is written to all the outside wireless tags and wireless tags for parts.

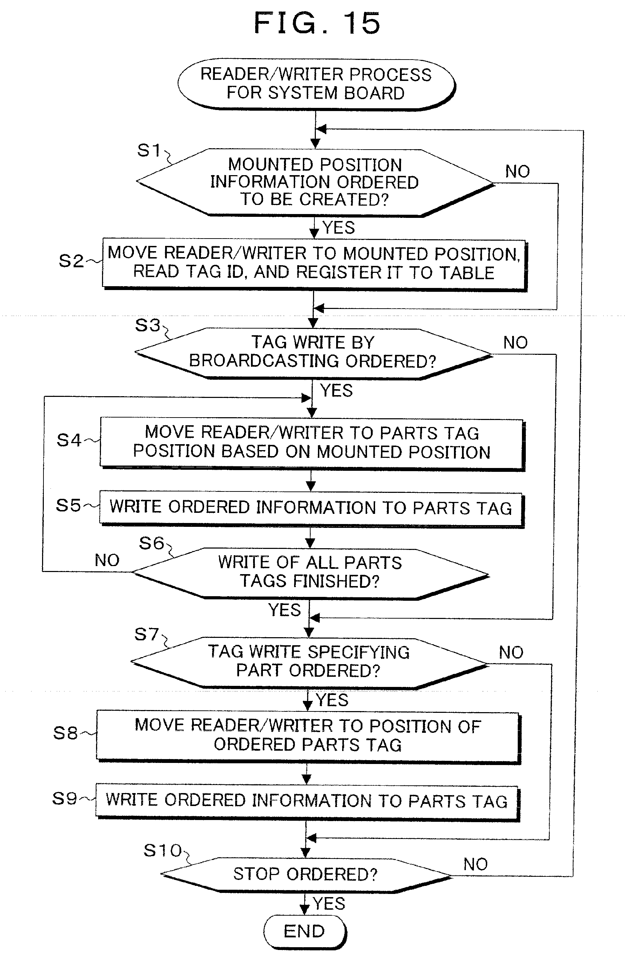

FIG. 15 is a flow chart of a reader/writer process of the reader/writer 70-1 movably provided in the movement mechanism of the case cover of the system board of FIG. 6. In FIG. 15, in the reader/writer process for the system board, when a creation instruction of the mounted position from the history information management unit 104 provided in the system monitoring mechanism 50-1 of FIGs. 4A and 4B is determined in step S1, the reader/writer is moved to the parts tag position based on the mounted position of the tag management table 136 shown in FIG. 10 so as to read the tag ID from the wireless tag for a part 65 and store the tag ID in the manner of the tag management table 136 of FIG. 10 in step S2. Note that, in the present embodiment, the mounted position of the tag management table 136 is registered in advance; however, in step S2 of FIG. 15, the wireless tag may be read by causing the reader/writer to perform two-dimensional scanning at constant pitch intervals, and the map of parts mounted positions may be created from the read results of the wireless tags. Subsequently, in step S2, whether there is a tag write instruction by broadcasting from the history information management unit 104 of FIGs. 4A and 4B is confirmed.

If there is the tag write instruction by broadcasting, the process proceeds to step S4, in which the reader/writer is moved to the first part tag position based on the mounted position of the tag management table 136 of FIG. 10, specified information is written to the part tag in step S5, and the processes of steps S4 and S5 are repeated until writing of all the parts tags is finished in step S6. The tag writing instruction by broadcasting performed in the steps S4 to S6 includes a tag writing instruction of the power distribution started date and time according to step S3 and a tag writing instruction of power distribution time of the server stop instruction according to step S9 of FIG. 13, and a tag writing instruction of the first shipment information of the first operation started day at the delivery destination according to step S10 of FIG. 14. Subsequently, whether there is a write instruction specifying a part is checked in step S7. If there is, the reader/writer is moved to the position of the specified part tag in step S8, and the specified information is written to the part tag in step S9. The tag write instruction specifying the part position includes write instructions of failure information to the tags of failure-occurred destinations according to step S7 of FIG. 13 and step S12 of FIG. 14, or a write instruction of manufacturing information to the tag of the replacement destination according to step S14 of FIG. 14. Subsequently, in step S15, whether there is a stop instruction is checked, and the processes from step S1 are repeated until there is a stop instruction.

Note that, in the above described embodiment, as the movement mechanism that moves the reader/writer with respect to the mounted parts of the system board, the mechanism that moves the reader/writer 70-1 by rotating the screw shaft by the motor as shown in FIGs. 4A and 4B is taken as an example; however, the movement mechanism is not limited to that of the present embodiment, and an arbitrary movement mechanism can be incorporated as long as it is the mechanism that two-dimensionally moves the reader/writer.

Moreover, in the embodiment of FIGs. 2A and 2B, the case in which one reader/writer 72 that accesses the outside wireless tags 64-1 to 64-33 provided inside the chassis 44 is provided in the chassis is taken as an example; however, when they cannot be covered by one reader/writer 72, plural reader/writers may be provided in accordance with needs.

Moreover, as the information processing apparatus to which the parts history information management system is applied, a server is taken as an example in the above described embodiment; however, the present embodiment is not limited thereto and can be applied to arbitrary apparatuses or devices without change.

Moreover, the present invention includes arbitrary modifications that do not impair the object and advantages thereof, and the present invention is not limited by the numerical values shown in the above described embodiment.

## Claims

1. A parts history management system of an information processing apparatus in which one or plural processing unit which is composed of plural parts replaceable upon failure, processes information, and is replaceable upon failure and a monitoring unit which monitors the state of the processing unit are mounted on an apparatus chassis, the parts history management system comprising:
plural wireless tags for the parts attached to the plural parts constituting the processing unit, respectively;
a reader/writer which inputs/outputs information to or from the wireless tag for the part and is provided in each of the processing unit;
a movement mechanism which is provided in the processing unit and moves the reader/writer to a part mounted position in the unit; and
a history information management unit which is provided in the monitoring unit, is connected to the reader/writer of the processing unit via a wireless network line, and gives an instruction of write or read of history information with respect to the wireless tag for the part so as to manage the information.

2. The parts history management system according to claim 1, wherein the processing apparatus is a server, and the processing unit is a system board on which a CPU, memory, DC-DC converter, and the like, which are replaceable upon failure are mounted.

3. The parts history management system according to claim 1, wherein, in the wireless tag for the part, manufacturing information including a manufacturer name, lot number, serial number, received date, part unique information, and the like is written in advance in a manufacturing stage.

4. The parts history management system according to claim 1, wherein the movement mechanism is provided on a cover inner surface of a unit case, which can be opened/closed, and moves the reader/writer in a two-dimensional direction with respect to plural parts mounted on a main body of the case so as to move the reader/writer to an arbitrary part mounted position.

5. The parts history management system according to claim 1, wherein, when first power-on after the apparatus is manufactured is determined, the history information management unit instructs the reader/writer of the processing unit to read and create parts mounted position information and causes the reader/writer to create and retain the parts mounted position information.

6. The parts history management system according to claim 1, wherein, when a notification of the information of failure occurred in the processing unit is received from the monitoring unit, the history information management unit instructs the reader/writer provided in the processing unit of the failure occurred location to write the failure information to the wireless tag for the part of the failure occurred location so as to move the reader/writer by the movement mechanism to the mounted position of the failure occurred part and causes the reader/writer to write the failure information to the wireless tag for the part.

7. The parts history management system according to claim 6, wherein the failure information includes a failure content, the mounted position upon failure occurrence, and failure occurrence date and time.

8. The parts history management system according to claim 1, wherein upon operation start after apparatus delivery, the history information management unit reads shipment information which has been written upon shipment from a wireless tag for the chassis attached to the outside of the apparatus chassis, instructs the reader/writer of all the processing unit to write the shipment information so as to sequentially move the reader/writer by the movement mechanism to the mounted positions of all the constituent parts and write the shipment information to the wireless tags for the parts.

9. The parts history management system according to claim 7, wherein the shipment information includes shipment date and time and a shipment destination.

10. The parts history management system according to claim 1, wherein when a notification of parts replacement information caused along active replacement of the part mounted in the processing unit is received from the monitoring unit during operation after an apparatus test step or apparatus delivery, the history information management unit instructs the reader/writer to write the parts replacement information to the wireless tag for the part of the replaced part so as to move the reader/writer by the movement mechanism to the mounted position of the replaced part and causes the reader/writer to write the parts replacement information to the wireless tag for the part.

11. The parts history management system according to claim 10, wherein the parts replacement information includes replaced date and time and the mounted position upon replacement.

12. The parts history management system according to claim 1, further comprising
an outside wireless tag attached to outside of another unit which is replaceably mounted on the apparatus chassis; and
a reader/writer for the chassis interior which inputs/outputs information with respect to the outside wireless tag and is fixedly disposed in the apparatus chassis; wherein
the history information management unit instructs the reader/writer for the chassis interior to write or read history information to or from the outside wireless so as to manage the history information of said another unit.

13. the parts history management system according to claim 12, wherein the information processing apparatus is a server, and said another unit includes a power source device, a fan tray, or a disk device which is replaceable by the unit upon failure.

14. The parts history management system according to claim 1, wherein the history information management unit transmits history information read from the wireless tag for the part to an external history information database via a wireless network line provided in the information processing apparatus.

15. The parts history management system according to claim 1, wherein the history information management unit encrypts and transmits read history information.
